# EUROPÄISCHE PATENTANMELDUNG

(11) **EP 0 990 538 A2**
(43) Veröffentlichungstag der Anmeldung: **05.04.2000**
(21) Anmeldenummer: 99117645.4
(22) Anmeldetag: 08.09.1999
(51) Int. Cl.: B60B 21/02, B60C 15/02

(54) **Fahrzeugrad mit - insbesondere einteiliger - Felge und schlauchlosem Luftreifen, das insbesondere für Notlauf geeignet ist, und ein Verfahren zu seiner Montage**

(30) Priorität: 28.09.1998 DE 19844368
(71) Anmelder: Continental Aktiengesellschaft, 30165 Hannover (DE)
(72) Erfinder: Döring, Werner, 30823 Garbsen (DE); Hesse, Heiko, 30900 Wedemark (DE); Sergel, Horst, 30657 Hannover (DE); Walloch, Frank, Dr., 31228 Peine (DE)

(57) **Zusammenfassung**

Fahrzeugrad mit - insbesondere einteiliger - Felge (1) und schlauchlosem Luftreifen, das - insbesondere für Notlauf geeignet ist -,
- mit insbesondere auf der radial äußeren Mantelfläche der Felge ausgebildeter Notlaufstützfläche
- mit an jeder Seitenwand des Luftreifens zur Außenseite des Luftreifens hin verdickt ausgebildeten Wulst (6) zur Befestigung des Luftreifens an der Felge,
- mit wenigstens einer in der Felge einstückig ausgebildeten Ringkammer (10) mit einer radial inneren, einer radial äußeren, einer axial zur Felgenmitte hin inneren und einer axial zur Felgenaußenseite hin äußeren Ringkammerwand und mit einer ringförmigen zur Ringkammer konzentrisch angeordneten Durchgangsöffnung zum Einführen des Wulstes in die Ringkammer bzw. zum Ausführen des Wulstes aus der Ringkammer,
- wobei ein Füllring (12) innerhalb der Ringkammer auf der Innenseite des Reifens ausgebildet und formschlüssig mit der einstückig ausgebildeten Ringkammer verbunden ist,
- wobei die Seitenwand des Reifens sich von außen durch die Durchgangsöffnung in die Ringkammer hinein erstreckt und der Wulst in der Ringkammer auf der vom Füllring wegweisenden Außenseite des Reifens formschlüssig mit der einstückig ausgebildeten Ringkammer verbunden ist,
- wobei insbesondere der Wulst und der Füllring die Ringkammer vollständig ausfüllen.

## Beschreibung

Die Erfindung betrifft ein Fahrzeugrad mit ― insbesondere einteiliger - Felge und schlauchlosem Luftreifen, das insbesondere für Notlauf geeignet ist sowie ein Verfahren zu seiner Montage.

Der Erfindung liegt die Aufgabe zugrunde ein Fahrzeugrad mit ― insbesondere einteiliger - Felge und schlauchlosem Luftreifen, das insbesondere für Notlauf geeignet ist, sowie ein Verfahren zu einer Montage eines derartigen Fahrzeugrades zu schaffen, bei dem der Formschluß einfach und zuverlässig hergestellt und im Betrieb des Fahrzeugrades aufrechterhalten wird.

Die Aufgabe wird erfindungsgemäß durch die Ausbildung eines Fahrzeugrades gemäß den Merkmalen des Anspruchs 1 sowie durch das Verfahren gemäß den Merkmalen von Anspruch 16 gelöst.

Die Ausbildung des Fahrzeugrades mit an jeder Seitenwand des Luftreifens zur Außenseite des Luftreifens hin verdickt ausgebildetem Wulst zur Befestigung des Luftreifens an der Feige, mit wenigstens einer in der Felge einstückig ausgebildeten Ringkammer mit einer radial inneren,einer radial äußeren, einer axial zur Felgenmitte hin inneren und einer axial zur Felgenaußenseite hin äußeren Ringkammerwand und mit einer ringförmigen zur Ringkammer konzentrisch angeordneten Durchgangsöffnung zum Einführen des Wulstes in die Ringkammer bzw zum Ausführen des Wulstes aus der Ringkammer, wobei ein Füllring innerhalb der Ringkammer auf der Innenseite des Reifens ausgebildet und formschlüssig mit der einstückig ausgebildeten Ringkammer verbunden ist, und wobei die Seitenwand des Reifens sich von außen durch die Durchgangsöffnung in die Ringkammer hinein erstreckt und der Wulst in der Ringkammer auf der vom Füllring wegweisenden Außenseite des Reifens formschlüssig mit der einstückig ausgebildeten Ringkammer verbunden ist, wird der Wulst und somit der Reifen in einfacher, zuverlässiger Weise durch Formschluß in axialer und radialer Richtung auf der Felge gesichert. Hierzu wird zunächst eine Seitenwand des Luftreifens mit ihrem zur Außenseite des Luftreifens hin verdickt ausgebildetem Wulst zur Befestigung des Luftreifens an der Felge durch die ringförmige zur Ringkammer konzentrisch angeordneten Durchgangsöffnung in die in der Felge einstückig ausgebildete Ringkammer eingeführt und dann Füllmaterial in die Ringkammer auf die Innenseite des Reifens ringförmig konzentrisch zur Ringkammer angeordnet und formschlüssig mit der einstückig ausgebildeten Ringkammer verbunden, sodaß der Wulst in der Ringkammer auf der vom Füllring wegweisenden Außenseite des Reifens formschlüssig mit der einstückig ausgebildeten Ringkammer verbunden wird. Die Ausbildung des Wulstes auf der Außenseite und die Ausbildung des Füllrings auf der nach innen gerichteten Reifenseite ermöglichen dabei in einfacher Weise einen vollständigen Formschluß Der Füllring ist in einer gegen den Formschluß gefährdente Beschädigung (beispielsweise durch von Umwelteinflüssen, durch Streifen von Bordsteinkanten oder sonstige mechanische Einwirkungen verursachte Beschädigungen) von außen weitgehend geschützten Reifeninnenlage angeordnet. Der Füllring kann in dieser gegen den Formschluß gefährdente Beschädigung von außen weitgehend geschützten Reifeninnenlage auch aus weniger gegen derartige Beschädigungen widerstandsfähigem, den reinen Formschluß optimierend ausgelegtem Material ausgebildet werden. Insbesondere bei Fahrzeuglrädern, die mit guten Notlaufeigenschaften ausgebildet werden sollen, ist es besonders wichtig, daß der Formschluß zuverlässig auch unter extremen Bedingungen sicher aufrechterhalten wird. Besonders zuverlässig ist der geschützte Formschluß, wenn Wulst und der Füllring die Ringkammer vollständig ausfüllen.

Besonders einfach und zuverlässig ist die Ausbildung gemäß den Merkmalen von Anspruch 2. Nach Einführen des Wulstes in die Ringkammer von axial außen wird der Füllring auf der Innenseite des Reifens in der Ringkammer angeordnet, sodaß zwischen radial innerer Ringkammerwand und Wulst, zwischen Füllring und Wulst und zwischen Füllring und radial äußerer Ringkammerwand radialer Formschluß und zwischen axial innerer Ringkammerwand und Wulst, zwischen axial innerer Ringkammerwand und Füllring, zwischen Wulst axial äußerer Ringkammerwand und zwischen Füllring und axial äußerer Ringkammerwand jeweils axialer Formschluß hergestellt wird. Während des Fahrzeugradbetriebes besteht sowohl im Normal- als auch bei Notlaufbetrieb nach Druckluftverlust ein vollständiger Formschluß nach axial außen und innen und nach radial außen und innen zwischen einstückiger Ringkammer der Felge und Wulst. Sowohl die axialen als auch die radial auf den Wulst wirkenden Kräfte werden somit unmittelbar in die im Befestigungsbereich einstückige Felge eingeleitet. Auf diese Weise kann der Wulst sogar im Notlaufbetrieb sicher und zuverlässig seine Position in der Ringkammer beibehalten. Durch einen in seiner Umfangslänge veränderbare Wulst kann der Reifen dabei in besonders einfacher und funktionssicherer Weise sowohl montiert als auch demontiert werden, wobei die Notlaufstüzflächen für den Notlauf optimiert werden können. Wenn der Wulst und der Füllring die Ringkammer vollständig ausfüllen, wird ein besonders zuverlässiger Formschluss zwischen Wulst und Felge erzielt. Besonders sicher ist die Krafteinleitung in die Felge, wenn der Füllring in seiner Kontaktfläche zur Reifenseitenwand über die vollständige Erstreckung des Wulstes auf der Seitenwand erstreckt Durch Ausbildung des Fahrzeugluftreifens mit elastisch veränderbarer Umfangslänge des Wulstes ist besonders einfach und sicher eine Umfangslängenveränderung von einer ersten Umfangslänge zu individuell entsprechend den jeweiligen Erfordernissen geänderten weiteren Umfangslängen entgegen der Wirkung rückstellender Kräfte und wieder zurück in die erste Umfangslänge unter Ausnützung der rückstellenden Kräfte erzielbar.

Bevorzugt ist die Ausbildung gemäß den Merkmalen von Anspruch 3. Der in seiner Umfangslänge ― insbesondere elastisch ― veränderbare Wulstkern ermöglicht die Montage des Wulstes durch Bewegung über die radiale äußere Oberfläche der Felge ― insbesondere über die Notlaufstützfläche - mit einem größeren Wulstkerndurchmesser als im befestigten Betriebszustand des Wulstes, sodaß die Ausbildung der radial äußeren Felgenoberfläche - insbesondere der Notlaufstützflächen - nicht mehr in Abhängigkeit vom Durchmesser des Wulstkerns im Betriebszustand und vom inneren Felgenhorndurchmesser, sondern in erster Linie den individuell durch die radial äußeren Felgenoberfläche bestimmten Erfordernissen ― insbesondere optimalen Notlaufeigenschaften - entsprechend ausgebildet werden kann.

Besonders vorteilhaft ist eine Ausbildung des Fahrzeugrades, bei dem der Wulstkern ein im Wulst integriert ausgebildeter Gummikern ist. Der Gummikern ist einfach herzustellen und kann besonders einfach und zuverlässig im Wulst verankert werden. Der Wulst kann hierdurch in einfacher, zuverlässiger Weise in seiner Umfangslänge elastisch dehnbar ausgebildet werden. Für einen besonders sicheren Sitz ist der Gummikern mit einer Shore - A- Härte aus dem Bereich von 80 bis 100 - bevorzugt aus dem Bereich zwischen 85 bis 90 ― ausgebildet.

Die Ausbildung gemäß den Merkmalen von Anspruch 5 ermöglicht hohe Dehnbarkeit. Die spiralige Wicklung 9 des Federdrahtes gewährt zusätzlich eine besonders hohe Gewölbesteifigkeit.

Durch die Ausbildung eines Fahrzeugrades, bei dem der größte Außendurchmesser der Notlaufstütztlächen um einen Faktor zwischen 1,05 und 1,3 größer als der Innenringdurchmesser des Wulstkerns im montierten Zustand des Fahrzeugrades beträgt, ermöglicht optimale Notlaufeigenschaften durch besonders großen Außendurchmesser der Notlaufstützflächen bei Beibehaltung der zur Erzielung guter Einfederung des Reifens und somit guter Komforteigenschaften optimaler kleiner Innenringdurchmesser des Wulstkerns. Die Ausbildung eines Fahrzeugrades, bei dem der größte Außendurchmesser der Notlaufstützflächen um einen Faktor zwischen 1,1 und 1,2 größer als der Innenringdurchmesser des Wulstkerns im montierten Zustand des Fahrzeugrades beträgt, stellt einen opimale Ausbildungsbereich der Standardreifendimensionen zur Lösung der Zielkonflikte zwischen gute Notlaufeigenschften einerseits und Komfort und Gewicht des Fahrzeugrades andererseits dar.

Die Ausbildung eines Fahrzeugrades, bei dem der Wulstkern eine Dehnbarkeit und/oder Stauchbarkeit von 5 bis 30 % aufweist, ermöglicht eine einfache und zuverlässige Montage trotz optimaler Notlaufeigenschaften durch Ausbildung besonders großer Außendurchmesser der Notlaufstützflächen trotz Beibehaltung der Ausbildung der Erzielung guter Einfederung des Reifens und somit guter Komforteigenschaften durch optimal kleine Innenringdurchmesser des Wulstkerns. Durch einfaches ― insbesondere elastisches - Dehnen und/oder Stauchen des Wulstes wird der Wulst jeweils auf den zur Montage bzw zur Demontage über die Notlaufstütztlächen erforderlichen optimalen Durchmesser und auf den zum sicheren Sitz in der Ringkammer erforderlichen optimalen Durchmesser eingestellt. Die Ausbildung eines Fahrzeugrades, bei dem der Wulstkern eine Dehnbarkeit und/oder Stauchbarkeit von 10 bis 20 % aufweist, ermöglicht eine einfache und zuverlässige Montage bei opimalem Ausbildungsbereich der Standardreifendimensionen zur Lösung der Zielkonflikte zwischen guten Notlaufeigenschaften einerseits und Komfort und Gewicht des Fahrzeugrades andererseits.

Bevorzugt ist die Ausbildung, wonach der Wulstkern im montierten Zustand des Fahrzeugrades ungedehnt und ungestaucht ist und somit in Umfangsrichtung weitgehend frei von in Umfangsrichtung wirkenden inneren Kräften ist.

Bevorzugt ist die Ausbildung gemäß den Merkmalen von Anspruch 8 zur Erzielung besonders guter Notlaufeigenschaften, da der Laufstreifen trotz optimaler Abstandsbreite der zwischen den Reifenwülsten des Fahrzeugluftreifens auch gerade in den besonders kritischen Schulterbereichen ausreichend gestützt werden kann und die im Notlauf in diesem kritischen Schulterbereich vom Laufflächenbereich auf die Notlaufstützfläche einwirkenden Kräfte weitgehend in gleicher axialer Positionin die Notlaufstützfläche eingeleitet werden wie im Normalbetrieb die Kräfte aus der Lauffläche in die Felge.

Besonders vorteihaft, weil hierdurch der Formschluß einfach und zuverlässig hergestellt werden kann, ist die Ausbildung gemäß den Merkmalen von Anspruch 9. Nach Einführen des Wulstes in die Ringkammer kann das Füllmaterial in unausgehärtetem Zustand zur Füllung der Ringkammer auf der Innenseite des Reifens durch die Einfüllöffnung eingefüllt werden, wobei die Luft aus der Ringkammer durch die Entlüftungsöffnung entweicht. Formschlußbehindernde Lufteinschlüsse können vermieden werden. Nach Aushärten des Füllmaterials ist der Wulst formschlüssig in der Ringkammer gesichert.

Die Ausbildung gemäß den Merkmalen von Anspruch 10 ermöglicht in besonders einfacher Weise die zuverlässige Befüllung der Ringkammer mit dem Füllmaterial. Bevorzugt, weil mit wenigen Bauteilen sehr einfach auszubilden ist die Ausbildung gemäß den Merkmalen der Ansprüche 11 und 12. Übertagungsverluste können reduziert werden. Durch Ausbildung eines Fahrzeugrades, bei dem die Vorratskammer stationär ― insbesondere einstückig mit der Felge - in der Felge ausgebildet ist, kann das Füllmaterial vorab bereits vor der Montage in unmittelbarer Nähe des Einsatzes im Betrieb angeordnet werden. Die Felgen können bereits mit Füllmaterial gefüllt zur Montage angeliefert werden. Die Ausbildung gemäß den Merkmalen von Anspruch 13 ermöglicht die Ausbildung der Vorratskammer unmittelbar benachbart zum Einsatzort des Füllmaterials in der Ringkammer. Durch Ausbildung der Vorratskammer in ihrer axialen Erstreckung in der Position der Notlaufstützfläche radial innerhalb Notlaufstützfläche kann der Raum zwischen Notlauffstützfläche und Ringkammer optimal ausgenutzt werden ohne daß andere Felgenbereiche räumlich verbaut werden müssen.

Die Ausbildung gemäß den Merkmalen von Anspruch 14 erleichtert in einfacher Weise die Befüllen der Ringkammer durch den direkten Kontakt der Ringkammer ins Fahrzeugradinnere. Eine Ausbildung, bei der die Entlüftungsöffnung der Ringkammer als eine Durchgangsöffnung zwischen Ringkammer und Innenraum des Reifens ausgebildet ist, ermöglicht in einfacher Weise die Entlüftung der Ringkammer ins Fahrzeugradinnere. Eine Ausbildung, bei der die Entlüftungsöffnung der Ringkammer als eine Durchgangsöffnung zwischen Ringkammer und Innenraum des Reifens druckreduzierend ausgebildet ist, ermöglicht in einfacher Weise die Befüllung der Ringkammer unter Einsatz des Fülldrucks des Fahrzeugrades zur Befüllung.

Die Ausbildung gemäß den Merkmalen von Anspruch 15 stellt eine vorteilhafte einfache Alternative zur Befüllung der Ringkammer von außerhalb des Fahrzeugrades dar.

Die Ansprüche 18 bis 21 stellen besonders vorteilhafte Verfahren zur Montage eines Fahrzeugrades von Anspruch 1 dar.

Die Erfindung wird im folgenden anhand der in den Figuren 1 bis 4 dargestellten Ausführungsbeispiele näher erläutert. Hierin zeigen
- Fig. 1: eine Querschnittsdarstellung eines erfindungsgemäßen Fahrzeugrades mit montiertem Fahrzeugreifen,
- Fig. 2: schematische Darstellung zur Erläuterung der Montage in einem ersten Verfahren,
- Fig. 3: schematische Darstellung zur Erläuterung der Montage in einem zweiten Verfahren,
- Fig.4: schematische Darstellung zur Erläuterung der Montage in einem dritten Verfahren.

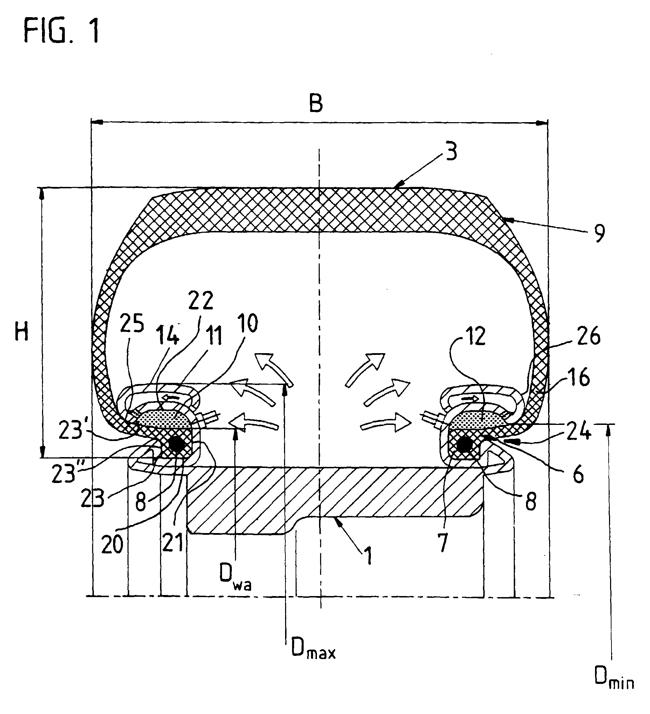

Fig. 1 zeigt ein Fahrzeugrad mit Fahrzeugluftreifen 3 und Felge 1 mit einem Verhältnis von maximaler Höhe H zu maximaler Breite B des Fahrzeugluftreifens H/B ≤ 0,6. Der Fahrzeugluftreifen 3 weist eine über den Umfang des Reifens und vom linken Wulstbereich 6 des Fahrzeugluftreifens zum rechten Wulstbereich 6 reichende, nicht näher dargestellte, Innenschicht auf, über die eine nicht dargestellte Karkasse radialer Bauart mit beispielsweise einer oder zwei Karkassenlagen aufgebaut ist. Im Bereich der Lauffläche ist radial außerhalb der Karkasse ein nicht dargestellter Gürtel bekannter Bauart mit beispielsweise zwei Gürtellagen aus in Kautschuk eingebetteten Festigkeitsträgern, z.B. aus Stahlcord, aufgelegt. Der Gürtel reicht über den gesamten Umfang des Reifans hinweg und erstreckt sich in axialer Richtung von einem Reifenschulterbereich in den anderen.

Die Stahlcorde verlaufen im spitzen Winkel von beispielsweise 10-30° a zur Umfangsrichtung. Radial außerhalb der Gürtellagen ist es denkbar, eine nicht dargestellte Gürtelbandage mit im wesentlichen zur Umfangsrichtung verlaufenden Festigkeitsträgern, beispielsweise aus Nylon, aufzuwickeln.

Radial außerhalb des Gürtels bzw. der Gürtelbandage ist in bekannter Weise ein über den Umfang des Reifens reichender und sich von Schulterbereich zu Schulterbereich erstreckender Laufstreifen aus Kautschukmaterial aufgelegt. Im Seitenwandbereich 9 ist Kautschukmaterial auf die Karkasse aufgelegt. Das Seitenwandkautschukmaterial reicht vom Schulterbereich bis zum Wulstbereich 6.

Die einstückig ausgebildete Felge 1 ist an ihren beiden axialen Stirnseiten jeweils mit einer konzentrisch zur Felge angeordneten Ringkammer 10 mit einer radial inneren Ringkammerwand 20, einer axial inneren Ringkammerwand 21, einer radial äußeren Ringkammerwand 22 und einer axial äußeren Ringkammerwand 23 einstückig ausgebildet. Axial nach außen zwischen radial äußerem Teil 23' und radial innerem Teil 23'' der Ringkammerwand 23 ist eine ringförmige Durchgangsöffnung 24 von axial außen zur Ringkammer hin ausgebildet. Im Anschluß an den äußeren Teil 23' der Ringkammerwand 23 ist die Felge in ihrem axial äußeren Bereich 25 von axial innen nach axial außen konisch erweitert und geht in die gekrümmte Stirnfläche 26 der Felge über. Auf der radial äußeren Seite der Felge erstreckt sich ein Notlaufsattel 11 mit seiner Notlaufsatteloberfläche 14 nach axial innen über die Position der Ringkammer 10 hinweg. Jede Notlaufsatteloberfläche erstreckt sich soweit nach axial innen, daß der Gürtel in seinen axialen Randzonen von der Schulter jeweils mit 10 bis 30 %, beispielsweise 25%, axial überdeckt ist.

Der Fahrzeugluftreifen 3 umgreift mit seinen unteren Seitenwandbereichen 16 die gekrümmten Bereiche 26. Die Krümmung der Stirnfläche 26 der Felge entspricht der gewünschten Reifenkontur in diesem Bereich.

Am Ende des unteren Seitenwandbereiches 16 ist jeweils der Wulstbereich 6 mit von der Innenseite des Reifens wegweisend ausgebildeter wulstartiger Verdickung 7 ausgebildet. Der Wulst ist mit einem in das Karkassenlagenende eingebetteten elastisch dehnbaren Kern 8 ausgebildet. Im montierten Zustand gemäß Fig. 1 füllt der Wulstbereich 6 unter Formschluß zur axial inneren Ringkammerwand 21, zur radial inneren Ringkammerwand 20 sowie zum unteren Teil 23''der axial äußeren Ringkammerwand 23 ca. 1/2 bis 3/4 des Ringkammerraums. Radial außerhalb des Wulstbereiches 6 ist ein Füllring 12 radial formschlüssig zum Wulstbereich 6 nach radial innen und nach radial außen zur radial äußeren Ringkammerwand 22 ausgebildet, der sich in axialer Richtung formschlüssig zwischen oberem Teil 23' der axial äußeren Ringkammerwand 23 und axial innerer Ringkammerwand 21 erstreckt. In der Ausführung von Fig.1 erstreckt sich der radial äußere Ringkammerbereich und der Füllring 12 in axialer Richtung bis hin fast zur axialen Position der Stirnseite 26 des Felgenhorns. Der Wulst steht in der Ausführung gemäß Fig. 1 unter Formschluß nach axial außen, nach radial innen und nach axial innen zu den geschlossenen Ringkammerwänden 23, 20, 21 und durch den radialen Formschluß zum Füllring 12, der seinerseits in axialem und radialem Formschluß zu den geschlossenen Ringkammerwänden 21,22,23 ausgebildet ist, auch nach radial außen in Formschluß zur Felge. Darüber hinaus steht der untere Seitenwandbereich 16 über die konisch ausgebildete axialen Verlängerung 25 außerhalb der Ringkammer mit der Felge und über die in diesem axial äußeren Bereich konische innere Mantelfläche des Füllrings 12 auch im axialen Erstreckungsbereich der Ringkammer axial außerhalb des Wulstes 6 mit dem Füllring in vollständigem Berührkontakt.

Der vollständige Formschluß des Wulstes zur Felge sichert den Sitz des Reifens auf der Felge während des Fahrens.

Im Bereich der gekrümmten Stirnfläche 26 der Felge liegt die Reifenseitenwand jeweils lediglich unter Vorspannung an.

Bei Auflage eines Umfangselementes des Reifens auf die Straßenoberfläche wirken resultierende Normalkräfte F zwischen Fahrzeugluftreifen und Straßenoberfläche. Bei der Eindämpfung dieser Kräfte wirkt auf die Seitenwände 9 des Reifens eine resultierende Kraft F_{A}, die im wesentlichen in axialer Richtung wirkt und die Seitenwand leicht weiter verkrümmt. Aufgrund der gewählten Vorspannung zwischen Stirnfläche 26 und Reifen liegt der Reifen in diesem Normallastfall unter Reduzierung der Vorspannung immer noch an der Stirnfläche 26 an. Bei Kurvenfahrten wird im Bereich der besonders stark belasteten Kurvenaußenseite aufgrund der eingeleiteten Kräfte die Vorspannung zwischen Stirnfläche 26 und Reifenseitenwand erhöht. Der Fahrzeugluftreifen 3 wird somit an der besonders stark belasteten Seite durch die Stirnfläche 26 versteift. Ein sicheres Handling ist gewährleistet.

Bei starken Stoßwirkungen auf den Reifen wirken stärkere resultierende Kräfte F_{A} auf die Reifenseitenwände. Diese beulen weiter nach axial außen bei der Eindämpfung aus. Der für die flexible Krümmung der Seitenwand hierzu zur Verfügung stehende Seitenwandbereich reicht dabei vom Schulterbereich des Laufstreifens bis über den gesamten gekrümmten Bereich der Stirnfläche 26. Bei starken Stößen hebt die Reifenseitenwand 9 im Bereich der Stirnfläche 26 unter Bildung eines Spaltes zwischen Stirnfläche 26 und Reifenseitenwand ab.

Auch besonders starke auf den Reifen einwirkende Stöße können aufgrund des großen Krümmungsradius R und der sehr langen für die Krümmung zur Verfügung stehenden Bogenlänge der Reifenseitenwand zwischen Reifenschulter und zylindrischer Felgenoberfläche unter geringer Flächenbeanspruchung der gekrümmten Seitenwandoberflächen sicher eingedämpft werden.

Der nach axial innen reichende Notlaufsattel 11 erstreckt sich über den gesamten Umfangsbereich des Reifens. Bei plötzlichem Innendruckverlust stützt sich der Reifen mit seinem Laufstreifenbereich auf den beiderseitig vorgesehenen, mit im wesentlichen zylindrischer oder nach axial innen mit leicht konisch erweiterter Oberfläche mit einem Steigungswinkel von 0 bis 10 ° zur Achsrichtung ausgebildeten Notlaufsattel 11 ab. Frühzeitige Zerstörung und Ablösung des Reifens werden vermieden.

Ebenso ist es denkbar, die radial äußere Oberfläche der Notlaufstützflächen mit zusätzlichem Stützmaterial zu belegen. Das zusätzliche Stützmaterial ist aus hartem Kunststoff, Gummi oder Kunststoffschaum ausgebildet, das zur Dämpfung unempfindlich gegen Stöße ist und das gute Gleiteigenschaften für den Notlauf aufweist.

Der Wulstkern 8 wird in bekannter Weise durch Einbettung des Kerns 8 in die Karkasse durch Umschlag der Karkasse um den Kern von innen nach außen oder von außen nach innen verankert. Die Karkasse ist eng um den Kern 8 gewickelt und der Umschlag ist im Anschluß an den Kern 8 in unmittelbarem Kontakt zum Hauptteil der Karkasse. Zur Ausbildung des Kerns 8 wird ein elastisches Gummimaterial mit einer Shore-A-Härte von 80 bis 95, vorzugsweise 90 - im Ausführungsbeispiel von Figur 1 mit einer Shore-A-Härte von 87 ― gewählt, das eine elastische Dehnbarkeit in Umfangsrichtung des Kerns von 5 bis 30%, für Standard-Reifendimensionen von 10 bis 20% aufweist.

Der Wulstkern wird durch Extrusion durch injection moulding oder vergleichsweise bekannte Techniken hergestellt.

Es ist auch denkbar, den Wulst kernlos auszubilden, wobei auch in diesem nichtdargestellten Ausführungsbeispiel das Gummimaterial des Wulstes so gewählt wird, daß der Wulst die genannten Dehnungseigenschaften in Umfangsrichtung aufweist.

Ebenso ist es auch denkbar, den Wulstkern in anderer geeigneter Weise auszubilden, wobei auch in diesem nichtdargestellten Ausführungsbeispiel das Wulstkern des Wulstes so gewählt wird, daß der Wulst die genannten Dehnungseigenschaften in Umfangsrichtung aufweist. Beispielsweise wird der Wulstkern aus einem wendelförmig um eine im Fahrzeugrad konzentrisch zur Fahrzeugradachse angeordnete Kreislinie gewickelten Filament oder Kord aus Stahl, beispielsweise aus Federstahl, ausgebildet.

Soweit der Abrieb zwischen Stirnfläche 26 und unterer Seitenwand 16 unerwünscht groß wird, ist es möglich, zusätzlich, wie nicht dargestellt ist, zwischen Felgenhorn und Wulst einen zusätzlichen Streifen von abriebfestem Material, beispielsweise von abriebfestem Gummi oder Kunststoff auszubilden. Der abriebfeste Streifen kann bis in die Ringkammer reichen und dort um den Wulst umgeschlagen sein.

In der Felge ist radial zwischen der Ringkammer 10 und dem Notlaufsattel 11 eine weitere Ringkammer 30 ausgebildet.

Im Folgenden wird die Montage des Reifens auf einer Felge beschrieben. Die Notlaufstützflächen 14 weisen einen maximalen Außendurchmesser Dmax, die beiden oberen Teile 23' der Ringkammerwände 23 einen minimalen Innendurchmesser Dmin auf. Der Reifenwulst ist in Fig. 1 im ungedehnten Zustand. Sein Außendurchmesser Dwa ist kleiner als der Durchmesser Dmin. Sein Innendurchmesser Dwi entspricht dem Durchmesser der radial inneren Ringkammerwand 20.

Zur Montage wird der Reifen 3 konzentrisch zur Felge zunächst an die Felge, beispielsweise von rechts, axial herangeführt. Der linke Wulst wird entgegen der elastischen Rückstellkräfte des Wulstes in Umfangsrichtung soweit gedehnt, daß der Innendurchmesser Dwi des Wulstes größer als der maximale Außendurchmesser Dmax der Notlaufstützflächen ist. Danach wird der Reifen 3 weiter konzentrisch zur Felge axial zur Felge hinbewegt, wobei der linke Wulst unter Beibehaltung seines gedehnten Zustandes mit Spiel zu den Notlaufstützflächen 14 axial über die Felge geschoben wird. Sobald der linke Wulst eine Position auf der linken Seite axial außerhalb des linken Felgenhorns erreicht hat wird der Wulst unter Ausnutzung der elastischen Rückstellkräfte wieder in seiner Umfangslänge soweit zurückgestellt, daß er in die Ringkammer 10 eingeführt werden kann. Nach Einführen in die Ringkammer 10 nimmt der Wulst in der Ringkammer 10 wieder den ungedehnten und ungestauchten Zustand einnimmt, In diesem Zustand entspricht Dwi wieder dem Durchmesser der Ringkammerwand 20 und Dwa wieder dem in Fig.1 gezeigten Durchmesser in der Sitzposition in der Ringkammer. Die Wülste sind in der Sitzposition in der Ringkammer ungedehnt und ungestaucht.

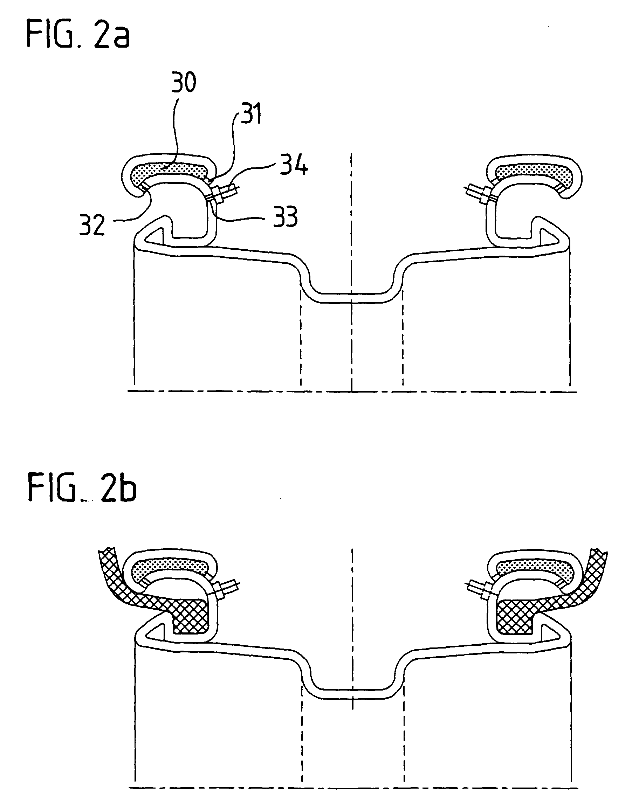

Anhand der Fig. 2a bis 2d wird im Folgenden die Herstellung des vollständigen Formschlusses des Wulstes zur Felge in der Ringkammer 10 beispielhaft beschrieben. Fig 2a zeigt die Ringkammer vor Einschieben des Wulstes. Die Ringkammer 30 ist in diesem Zustand mit nicht ausgehärtetem Füllmaterial aus Kunststoff oder Harz gefüllt. Fig2b zeigt den oben beschriebenen Zustand nach Einschieben des Wulstes in die Ringkammer 10, in dem die Wülste in der Sitzposition in der Ringkammer ungedehnt und ungestaucht an der Ringkammerwand 20 radial und an der Ringkammerwand 21 und dem unteren Teil23'' der Ringkammerwand 23 axial anliegen.

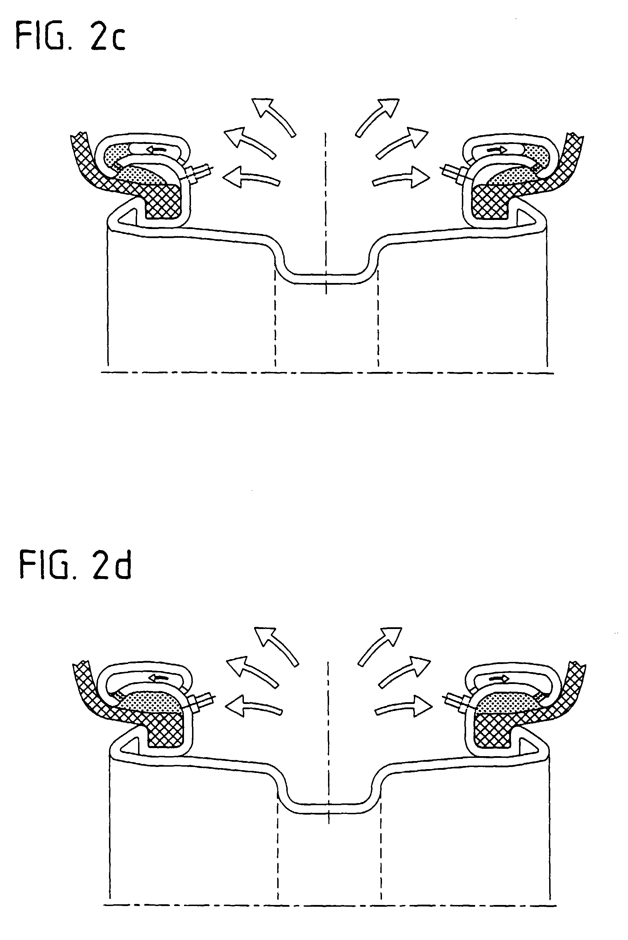

Wie in Fig. 2c dargestellt ist, wird nun der Innendruck des Fahrzeugrades über das nicht dargestellte Radventil erhöht. Über gleichmäßig über den Umfang verteilte Durchgangsöffnungen 31 zwischen der Ringkammer 30 und dem Innenraum des Fahrzeugrades wirkt der erhöhte Druck auf das nicht ausgehärtete Füllmaterial in der Ringkammer 30. Das Einwegeventil 34 in der die Ringkammer 10 mit dem Innenraum des Fahrzeugrades verbindenden Entlüftungsöffnung 32 verhindert, daß der Innendruck in der Ringkammer 10 ebenfalls anghoben wird. Die Druckdifferenz bewirkt, daß das Füllmaterial über gleichmäßig über den Umfang des Fahrzeugrades verteilt angeordnete die Ringkammer 10 mit der Ringkammer 30 verbindende Durchgangsöffnungen 31aus der Ringkammer 30 in die Ringkammer 10 über den Umfang gleichmäßig einströmt. Die Ringkammer 30 wird dabei durch das Einwegeventil 34 entlüftet. Das Füllmaterial strömt solange ein, bis die Ringkammer 10 vollständig gefüllt ist. Dieser Zustand ist in Fig.2d dargestellt. In diesem Zustand härtet das Füllmaterial aus.

Nach Aushärten des Füllmaterials in der Ringkammer 10 bildet das Füllmaterial einen Füllring 12 . In der Ringkammer 10 ist der Wulst formschlüssig vollständig von den Ringkammerwänden 20, 21, 23'' und dem Füllring 12 umschlossen.Der Füllring 12 ist formschlüssig vollständig von den Ringkammerwänden 21,22,23' und der unteren Seitenwand 16 des Reifens mit dem Wulstbereich 6 umschlossen.Der Formschluß zwischen Füllring 12 , Wulst und Felge ist nun hergestellt.

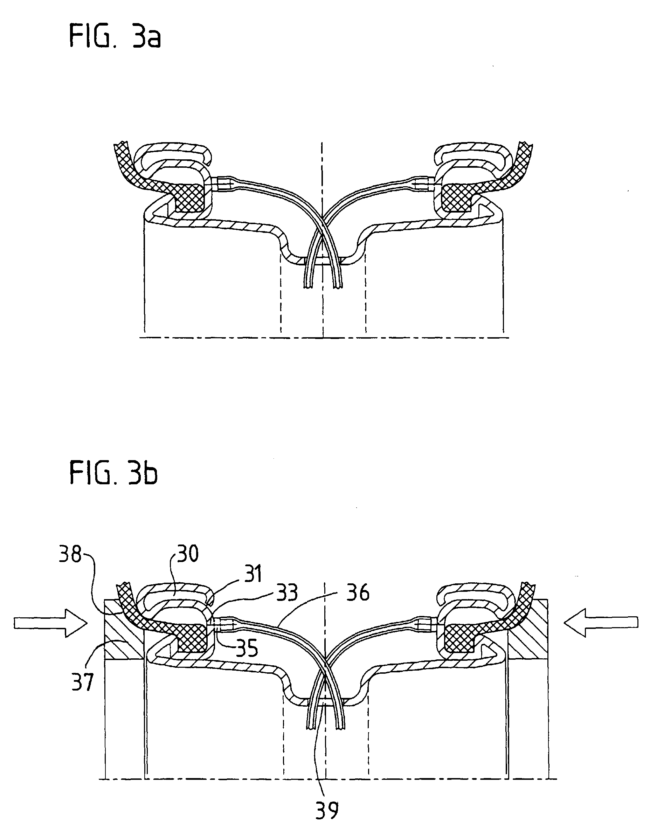

Anhand der Fig. 3a bis 3d wird im Folgenden eine alternative Herstellung des vollständigen Formschlusses des Wulstes zur Felge in der Ringkammer 10 beispielhaft beschrieben. Fig 3a zeigt die Ringkammer vor Einschieben des Wulstes. Die Ringkammer 30 ist in diesem Zustand leer.

Fig3b zeigt den oben beschriebenen Zustand nach Einschieben des Wulstes in die Ringkammer 10, in dem die Wülste in der Sitzposition in der Ringkammer ungedehnt und ungestaucht an der Ringkammerwand 20 radial und an der Ringkammerwand 21 und dem unteren Teil23'' der Ringkammerwand 23 axial anliegen. Mittels Montagehilfen 37 wird die untere Seitenwand zur Sicherstellung der dichten Anlage des Reifens axial an die die Stirnfläche 26 der Felge gedrückt. Hierzu ist ringförmige Montagehilfe37 mit einer zur Stirnfläche 26 der Felge korrespondierend gekrümmt ausgebildeten Kontur 38 ausgebildet.

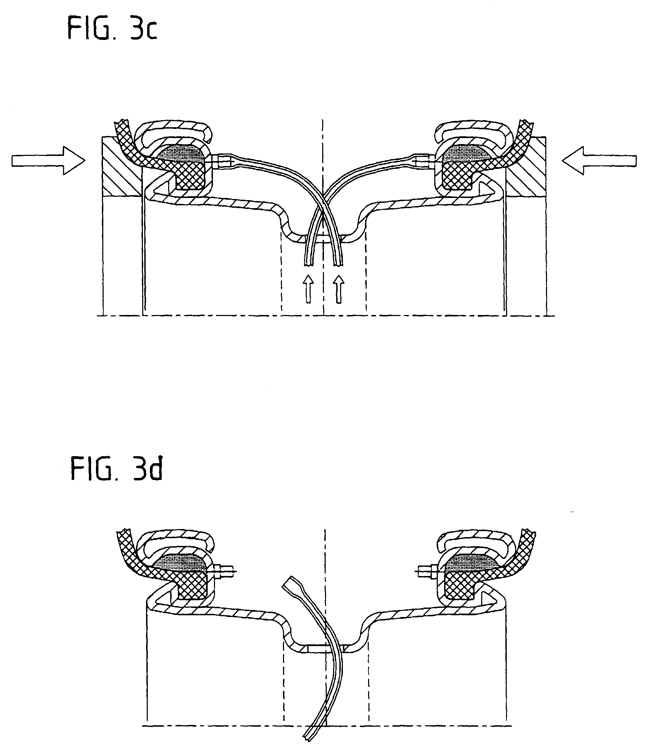

Wie in Fig. 3c dargestellt ist, wird nun von einer nicht dargestellten Pumpe außerhalb des Fahrzeugrades über einen Schlauch 36, der durch eine Öfnung ― beispielsweise die Venitlöffnung - in der Felge ins Fahrzeugrad innere geführt und an einem in der Durchgangsöffnung 33 befestigten Schlauchanschlußstück befestigt ist, nicht ausgehärtetes Füllmaterial von einem Füllmaterialspeicher außerhalb des Fahrzeugrades in die Ringkammer 10 gepreßt. Über die Durchgangsöffnungen 32 und 31 wird die Ringkammer 10 dabei entlüftet. Das Füllmaterial strömt solange ein, bis die Ringkammer 10 vollständig gefüllt ist. Die Montagehilfe 37 und der Schlauch 36 werden entfernt. Dieser Zustand ist in Fig.3d dargestellt. In diesem Zustand härtet das Füllmaterial aus.

Nach Aushärten des Füllmaterials in der Ringkammer 10 bildet das Füllmaterial einen Füllring 12 . In der Ringkammer 10 ist der Wulst formschlüssig vollständig von den Ringkammerwänden 20, 21, 23'' und dem Füllring 12 umschlossen.Der Füllring 12 ist formschlüssig vollständig von den Ringkammerwänden 21,22,23' und der unteren Seitenwand 16 des Reifens mit dem Wulstbereich 6 umschlossen.Der Formschluß zwischen Füllring 12 , Wulst und Felge ist nun hergestellt.

Auch im Verfahren von Fig.2 ist der Einsatz von Montagehilfen 37 zur Erhöhung der Dichtwirkung während des Einfüllens des Füllmaterials möglich.

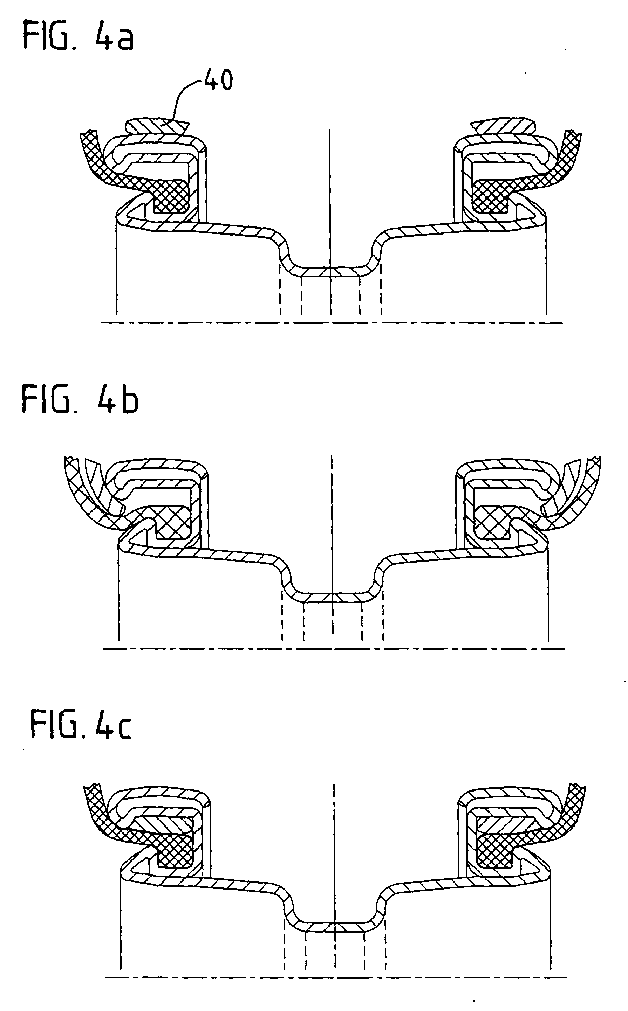

Anhand der Fig. 4a bis 4c wird im Folgenden eine weitere alternative Herstellung des vollständigen Formschlusses des Wulstes zur Felge in der Ringkammer 10 beispielhaft beschrieben.

Fig 4a zeigt die Ringkammer nach Einschieben des Wulstes in die Ringkammer 10, in dem die Wülste in der Sitzposition in der Ringkammer ungedehnt und ungestaucht an der Ringkammerwand 20 radial und an der Ringkammerwand 21 und dem unteren Teil23'' der Ringkammerwand 23 axial anliegen. Die Ringkammer 30 ist in diesem Zustand leer. Auf der Notlauffstützfläche ist ein sich über den Umfang erstreckendes Streitenmaterial ― beispielsweise aus Gummi - elastisch gedehnt aufgelegt.

Wie in Fig. 4b dargestellt ist, bewegt sich das Streifenmaterial nach nicht dargestellter mechanischer Anregung aufgrund seiner rückstellenden Kräfte an der Stirnfläche 26 der Felge entlang in die Ringkammer 10. Die Konturen von Streitenmaterial und Stirnfläche sind dabei so ausgebildet, daß das Streitenmaterial selbständig in seine Sitzposition in der Ringkammer gleitet. Über die Durchgangsöffnungen 32 und 31 wird die Ringkammer 10 dabei entlüftet. Dieser Zustand ist in Fig.4c dargestellt.

Das Streifenmaterial in der Ringkammer 10 bildet einen Füllring 12. In der Ringkammer 10 ist der Wulst formschlüssig vollständig von den Ringkammerwänden 20, 21, 23'' und dem Füllring 12 umschlossen.Der Füllring 12 ist formschlüssig vollständig von den Ringkammerwänden 21,22,23' und der unteren Seitenwand 16 des Reifens mit dem Wulstbereich 6 umschlossen.Der Formschluß zwischen Füllring 12 , Wulst und Felge ist nun hergestellt.

Soweit erforderlich kann das Streifenmaterial mithilfe eines nicht dargestellten Montagebandes, das mit seinem einen Ende am Streitenmaterial befestigt ist und mit seinem anderen Ende durch die Ringkammer 10 und die Durchgangsöffnung 33 und die Ventilöffnung des Fahrzeugrades nach außen reicht, durch Ziehen dieses zweiten Endes von außen um die Stirnfläche 26 in die richtige Sitzposition in der Ringkammer 10 gezogen werden. Danach wird das Montageband abgetrennt.

Es ist auch denkbar, den Reifen zur Montage anstatt ihn axial zu verschieben, zunächst um 90 ° zu drehen und dann zu dehnen und im gedehnten Zustand in radialer Richtung auf die Felge zu schieben, um ihn dort wieder um 90 ° zurückzudrehen, so daß sich die beiden Wülste jeweils axial außerhalb der Felge befinden. Die weitere Montage erfolgt wie oben beschrieben. Soweit es die gewählten Notlaufstütztlächen erlauben, ist es hier auch denkbar, den Kern nur flexibel und mit keiner oder geringer Dehnbarkeit auszubilden

Die Notlaufstützflächen können auch mit einem größeren maximalen Außendurchmesser Dmax entsprechend den individuell einzustellenden Notlauteigenschatten eines Reifens ausgebildet sein. Der maximale Durchmesser Dmax der Notlaufstützflächen ist dabei bei Standardreifen optimalerweise um einen Faktor 1,1 bis 1,2 größer als der Innenringdurchmesser Dsi des Wulstkerns im montierten Zustand des Fahrzeugrades. Er kann in Spezialfällen jedoch auch um einen Faktor zwischen 1,05 und 1,3 größer sein als der Innenringdurchmesser Dsi des Wulstkerns im montierten Zustand des Fahrzeugrades. Als Gummimaterial des Wulstes wird hierfür jeweils ein Gummimaterial mit einer Dehnungsfähigkeit gewählt, die ein solches Dehnen des Wulstes in Umfangsrichtung erlauben, daß der Wulst über die Notlaufstützfläche 14 und in die Ringkammer axial bewegt werden können. Dementsprechend wird der Wulst, der im montierten Zustand des Fahrzeugrades ungedehnt und ungestaucht ist, derart ausgebildet, daß er eine Dehnbarkeit zwischen 10 und 20 % bei Standardreifen und in den Spezialfällen eine Dehnbarkeit zwischen 5 und 30 % aufweist.

Es ist auch denkbar, einen Notlaufsattel auf der radial äußeren Mantelfläche auszubilden, dessen Notlaufstützfläche sich über den gesamten axialen Mittenbereich der Felge erstreckt. Diese kann beispielsweise über die gesamte axiale Gürtelbreite des Reifens ausgebildet sein.

### Bezugszeichenliste

- 1: Felge
- 3: Fahrzeugluftreifen
- 6: Wulstbereich
- 7: Wulstartige Verdickung
- 8: Wulstkern
- 9: Seitenwand
- 10: Ringkammer
- 11: Notlaufsattel
- 12: Füllring
- 14: Notlaufsatteloberfläche
- 16: unterer Seitenwandbereich
- 20: Ringkammerwand
- 21: Ringkammerwand
- 22: Ringkammerwand
- 23: Ringkammerwand
- 24: Durchgangsöffnung
- 25: Axial äußerer Bereich
- 26: Stirnfläche der Felge
- 30: Ringkammer
- 31: Durchgangsöffnung
- 32: Durchgangsöffnung
- 33: Durchgangsöffnung
- 34: Einwegventil
- 35: Schlauchanschluß
- 36: Schlauch
- 37: Montagehilfe
- 38: Gekrümmte Kontur
- 39: Öffnung
- 40: Elastischer Füllring

## Patentansprüche

1. Fahrzeugrad mit ― insbesondere einteiliger - Felge und schlauchlosem Luftreifen, das ― insbesondere für Notlauf geeignet ist -,
- mit insbesondere auf der radial äußeren Mantelfläche der Felge ausgebildeter Notlaufstützfläche
- mit an jeder Seitenwand des Luftreifens zur Außenseite des Luftreifens hin verdickt ausgebildetem Wulst zur Befestigung des Luftreifens an der Felge,
- mit wenigstens einer in der Felge einstückig ausgebildeten Ringkammer mit einer radial inneren,einer radial äußeren, einer axial zur Felgenmitte hin inneren und einer axial zur Felgenaußenseite hin äußeren Ringkammerwand und mit einer ringförmigen zur Ringkammer konzentrisch angeordneten Durchgangsöffnung zum Einführen des Wulstes in die Ringkammer bzw zum Ausführen des Wulstes aus der Ringkammer,
- wobei ein Füllring innerhalb der Ringkammer auf der Innenseite des Reifens ausgebildet und formschlüssig mit der einstückig ausgebildeten Ringkammer verbunden ist,
- wobei die Seitenwand des Reifens sich von außen durch die Durchgangsöffnung in die Ringkammer hinein erstreckt und der Wulst in der Ringkammer auf der vom Füllring wegweisenden Außenseite des Reifens formschlüssig mit der einstückig ausgebildeten Ringkammer verbunden ist,
- wobei insbesondere der Wulst und der Füllring die Ringkammer vollständig ausfüllen.

2. Fahrzeugrad gemäß den Merkmalen von Anspruch 1,
- mit an jeder Seitenwand des Luftreifens zur Außenseite des Luftreifens hin verdickt ausgebildetem Wulst zur Befestigung des Luftreifens an der Felge,
- mit wenigstens in einer axialen Stirnseite der Felge einstückig ausgebildeter Ringkammer mit einer radial inneren,einer radial äußeren, einer axial zur Felgenmitte hin inneren und einer axial zur Felgenaußenseite hin äußeren Ringkammerwand, wobei die nach axial außen zur Stirnseite der Felge hin ausgebildete Ringkammerwand aus einem im radial äußeren Bereich ausgebildeten nach radial innen gerichteten ersten Wandbereich und aus einem im radial inneren Bereich ausgebildeten nach radial außen gerichteten zweiten Wandbereich und einer radial zwischen dem ersten und dem zweiten Wandbereich ausgebildeten ringförmigen zur Ringkammer konzentrisch angeordneten axialen Durchgangsöffnung ausgebildet ist,
- wobei ein Füllring innerhalb der Ringkammer auf der radial äußeren Ringkammerwand radial fest gelagert ist und in formschlüssigem Berührkontakt zur radial äußeren, zur axial inneren und zum ersten Wandbereich der axial äußeren Ringkammerwand ausgebildet ist, sodaß der Füllring nach radial außen, nach axial außen und nach axial innen formschlüssig mit der einstückig ausgebildeten Ringkammer verbunden ist,
- wobei die Seitenwand des Reifens sich von axial außen durch die Öffnung in der axial außen ausgebildeten Ringkammerwand hindurch nach innen erstreckt und der Wulst in der Ringkammer auf der radialen Innenseite des Füllrings radial fest gelagert ist und in formschlüssigem Berührkontakt zur radial inneren, zur axial inneren und zum zweiten Wandbereich der axial äußeren geschlossenen Ringkammerwand ausgebildet ist, sodaß der Wulst nach radial innen, nach axial außen, nach axial innen und über den Füllring nach radial außen formschlüssig mit der einstückig ausgebildeten Ringkammer verbunden ist.

3. Fahrzeugrad gemäß den Merkmalen von Anspruch 1 oder 2,
mit einem in seiner Umfangslänge ― insbesondere elastisch - veränderbarem Wulst.

4. Fahrzeugrad gemäß den Merkmalen von Anspruch 3,
wobei im Wulst ein Gummikern integriert ausgebildet ist,
wobei der Gummikern insbesondere mit einer Shore -A- Härte aus dem Bereich von 80 bis 100, bevorzugt aus dem Bereich zwischen 85 bis 90 ausgebildet ist.

5. Fahrzeugrad gemäß den Merkmalen von Anspruch 3,
- wobei im Wulst ein dehnbarerMetallkern ― insbesondere aus spiralig gewickeltem Federdraht - integriert ausgebildet ist.

6. Fahrzeugrad gemäß den Merkmalen von Anspruch 3, 4 oder 5,
- bei dem insbesondere der maximale Durchmesser der Notlaufstützflächen um einen Faktor zwischen 1,05 und 1,3 ― insbesondere zwischen 1,1 und 1,2 ― größer als der Innenringdurchmesser des Wulstkerns im montierten Zustand des Fahrzeugrades beträgt.

7. Fahrzeugrad gemäß den Merkmalen von einem der vorangegangenen Ansprüche,
wobei der Wulstkern eine Dehnbarkeit und/oder Stauchbarkeit von 5 bis 30 % - insbesondere 10 bis 20 % - aufweist,
wobei der Wulstkern insbesondere im montierten Zustand des Fahrzeugrades ungedehnt und ungestaucht ist.

8. Fahrzeugrad gemäß den Merkmalen von einem der Ansprüche 1 bis 5,
wobei die axiale Position der in der radial äußeren Mantelfläche ausgebildeten Notlaufstützfläche zumindest teilweise der axialen Position eines in der Felge befestigten Wulstes entspricht.

9. Fahrzeugrad gemäß den Merkmalen von einem der vorangegangenen Ansprüche,
wobei die Ringkammer mit wenigstens einer Einfüllöffnung zum Einbringen des Füllmaterials und mit wenigstens einer Belüftungsöffnung zur Belüftung während des Einbringens ausgebildet ist

10. Fahrzeugrad gemäß den Merkmalen von Anspruch 9,
- mit Mitteln zum Verbinden der Befüllöffnung mit einer Vorratskammer zur Aufnahme von unausgehärtetem, fließfähigem Füllmaterial zwecks Zuführung des unausgehärtetem, fließfähigem Füllmaterial aus der Vorratskammer durch die Befüllöffnung in die Ringkammer,
- wobei insbesondere die Mittel zum Verbinden der Befüllöffnung mit der Vorratskammer einstückig mit der Befüllöffnung ausgebildet sind.

11. Fahrzeugrad gemäß den Merkmalen von Anspruch 10,
wobei die Mitteln zum Verbinden der Befüllöffnung mit der Vorratskammer stationär― insbesondere einstückig mit der Felge - in der Felge ausgebildet sind.

12. Fahrzeugrad gemäß den Merkmalen von Anspruch 10,
wobei die Vorratskammer stationär ― insbesondere einstückig mit der Felge - in der Felge ausgebildet ist.

13. Fahrzeugrad gemäß den Merkmalen von Anspruch 12,
- wobei die Vorratskammer ― insbesondere ringförmig konzentrisch zur Ringkammer ― radial auf der Ringkammer ausgebildet ist,
- wobei insbesondere die Vorratskammer in ihrer axialen Erstreckung in der Position der Notlaufstützfläche radial innerhalb Notlaufstützfläche ausgebildet ist.

14. Fahrzeugrad gemäß den Merkmalen von Anspruch 13,
wobei die Vorratskammer mit wenigstens einer Durchgangsöffnung zum Innenraum des Reifens ausgebildet ist und
wobei insbesondere die Entlüftungsöffnung der Ringkammer als eine Durchgangsöffnung zwischen Ringkammer und Innenraum des Reifens ― insbesondere druckreduzierend ― ausgebildet ist

15. Fahrzeugrad gemäß den Merkmalen von Anspruch 9,
- mit Mitteln zum kuppelbaren Verbinden der Befüllöffnung mit einer Vorratskammer zur Aufnahme von unausgehärtetem, fließfähigem Füllmaterial zwecks Zuführung des unausgehärtetem, fließfähigem Füllmaterial aus der Vorratskammer durch die Befüllöffnung in die Ringkammer,
- wobei insbesondere die Befüllöffnung mit einem Anschlußstück zum Ankuppeln eines rohr- oder schlauchförmigen Zuführelementes ausgebildet ist, das mit einer Vorratskammer außerhalb des Fahrzeugrades in Förderverbindung steht.

16. Verfahren zur Montage eines Fahrzeugrades gemäß den Merkmalen von Anspruch 1,
- wobei zunächst eine Seitenwand des Luftreifens mit ihrem zur Außenseite des Luftreifens hin verdickt ausgebildetem Wulst zur Befestigung des Luftreifens an der Felge durch die ringförmige zur Ringkammer konzentrisch angeordneten Durchgangsöffnung in die in der Felge einstückig ausgebildete Ringkammer eingeführt wird,
- wobei dann Füllmaterial in die Ringkammer auf die Innenseite des Reifens ringförmig konzentrisch zur Ringkammer angeordnet und formschlüssig mit der einstückig ausgebildeten Ringkammer verbunden wird, sodaß der Wulst in der Ringkammer auf der vom Füllring wegweisenden Außenseite des Reifens formschlüssig mit der einstückig ausgebildeten Ringkammer verbunden wird.

17. Verfahren zur Montage eines Fahrzeugrades gemäß den Merkmalen von Anspruch 16,
- wobei das Füllmaterial in nicht ausgehärtetem Zustand in die Ringkammer auf die Innenseite des Reifens ringförmig konzentrisch zur Ringkammer verteilt und danach ausgehärtet und hierdurch formschlüssig mit der einstückig ausgebildeten Ringkammer verbunden wird, sodaß der Wulst in der Ringkammer auf der vom Füllring wegweisenden Außenseite des Reifens formschlüssig mit der einstückig ausgebildeten Ringkammer verbunden wird

18. Verfahren zur Montage eines Fahrzeugrades gemäß den Merkmalen von Anspruch 17,
- wobei das nicht ausgehärtete Füllmaterial durch eine Einfüllöffnung in der Ringkammer aus einer zur Aufnahme des nicht ausgehärteten Füllmaterials stationär im Fahrzeugrad ausgebildeten Vorratskammer in die Ringkammer eingeführt wird.

19. Verfahren zur Montage eines Fahrzeugrades gemäß den Merkmalen von Anspruch 18,
- wobei das nicht ausgehärtete Füllmaterial durch eine Einfüllöffnung in der Ringkammer aus einer zur Aufnahme des nicht ausgehärteten Füllmaterials stationär im Fahrzeugrad ausgebildeten Vorratskammer in die Ringkammer durch Ausnutzung von Druckunterschieden zwischen Vorratskammer und Ringkammer ― insbesondere durch Anlegen eines Überdrucks im Fahrzeugrad - eingeführt wird.

20. Verfahren zur Montage eines Fahrzeugrades gemäß den Merkmalen von Anspruch 17,
- wobei das nicht ausgehärtete Füllmaterial durch eine Einfüllöffnung in der Ringkammer aus einer zur Aufnahme des nicht ausgehärteten Füllmaterials außerhalb des Fahrzeugrades ausgebildeten Vorratskammer in die Ringkammer gefördert wird.

21. Verfahren zur Montage eines Fahrzeugrades gemäß den Merkmalen von Anspruch 16,
- wobei das Füllmaterial vor Einführen des Wulstes in die Kammer mit einem rückstellenden Kraftpotential ausgebildet im Fahrzeugrad außerhalb der Ringkammer angeordnet und nach Einführung des Wulstes in die Befestigungsposition in der Ringkammer unter Ausnutzung des rückstellenden Kraftpotentials in die Ringkammer auf die Innenseite des Reifens ringförmig konzentrisch zur Ringkammer positioniert und hierdurch formschlüssig mit der einstückig ausgebildeten Ringkammer verbunden wird, sodaß der Wulst in der Ringkammer auf der vom Füllring wegweisenden Außenseite des Reifens formschlüssig mit der einstückig ausgebildeten Ringkammer verbunden wird.
